# EUROPEAN PATENT SPECIFICATION

(11) **EP 1 477 352 B1**
(45) Date of publication and mention of the grant of the patent: **12.12.2007**
(21) Application number: 04011165.0
(22) Date of filing: 11.05.2004
(51) Int. Cl.: B60J 7/14

(54) **Retractable roof for motor vehicle**
Versenkbares Dach für ein Kraftfahrzeug
Toit rétractable pour véhicule automobile

(30) Priority: 12.05.2003 JP 2003133553
(43) Date of publication of application: 17.11.2004
(73) Proprietor: Webasto AG, 82131 Stockdorf (DE)
(72) Inventor: Yoshida, Osamu, Higashihiroshima-city (JP); Odoi, Kozo, Aki-gun Hiroshima (JP)

(56) References cited:
- DE-A1- 10 155 887
- US-A- 4 671 559
- PATENT ABSTRACTS OF JAPAN vol. 2003, no. 01, 14 January 2003 (2003-01-14) & JP 2002 264658 A (AISIN SEIKI CO LTD; TOYOTA MOTOR CORP), 18 September 2002 (2002-09-18)

## Description

### Detailed Description of the Invention

### Technical Field of the Invention

The present invention relates to a motor vehicle comprising a retractable roof that is adapted to be retracted freely from an operating position for covering the vehicle compartment into a retracted position to be housed in a storage room, said retractable roof comprising a rear roof for covering the rear portion of said compartment and a front roof for covering the front portion of said compartment.

### Prior Art

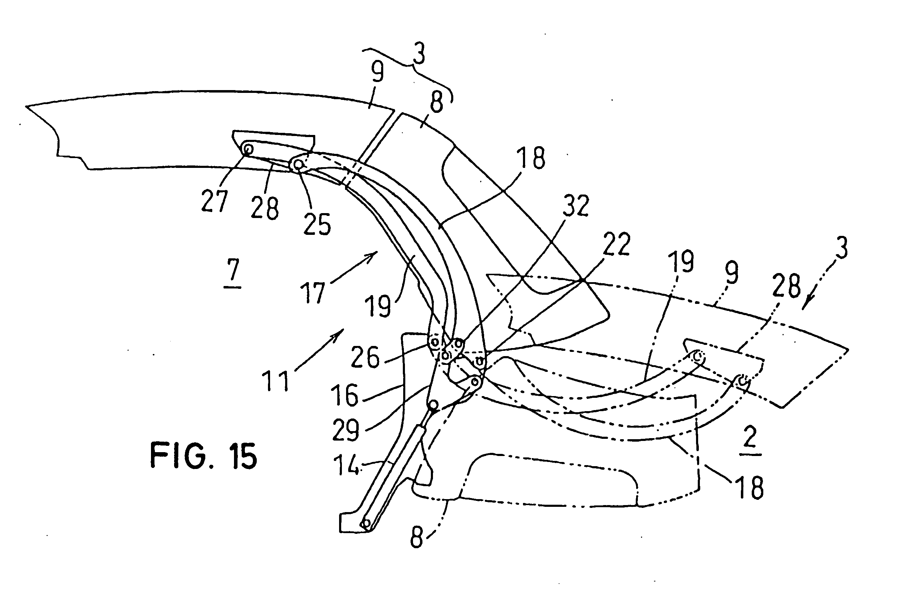

A conventional motor vehicle comprises a retractable roof that is adapted to be retracted freely from an operating position into a retracted position to be housed in a trunk room (for example, refer Japanese laid open patent application JP 2002-264658).
In said motor vehicle as shown, for example, in Fig. 15, a retractable roof comprises a rear roof for covering a rear portion of a vehicle compartment and a front roof for covering a front portion of vehicle compartment, and it is supported by a drive unit so as to be movable between an operating position shown in the actual line and a retracted position shown in the imaginary line.

Said drive unit comprises a pair of four-joint link mechanisms arranged on the right and left sides of retractable roof and roof cylinders on the right and left sides to actuate said four-joint link mechanisms respectively.
The right and left four-joint link mechanisms comprise a primary link and a secondary link, and on right and left sides of rear roof is arranged a main bracket fixed to the vehicle body.
Primary link is fixedly mounted to the side of rear roof and its end is pivotally coupled to main bracket via a pivotal axis so as to be freely pivotable around the axe center of said axis arranged in the lateral direction, so that rear roof can be supported freely pivotable around pivotal axis.

Other end of primary link is pivotally coupled via a pivotal axis to a bracket fixed to the rear side of front roof so as to be freely pivotable around the axe center of said axis arranged in the lateral direction.
Secondary link supports front roof together with said primary link in such a manner that its end is pivotally coupled to main bracket via a pivotal axis so as to be freely pivotable around the axe center of said axis arranged in the lateral direction and its other end is pivotally coupled to said bracket via a pivotal axis so as to be freely pivotable around the axe center of said axis arranged in the lateral direction.

Driving unit 11 comprises a drive link 29, that is pivotally coupled to main bracket 16 freely pivotable around the axe center in the lateral direction and rotated by a roof cylinder 14, and a connecting link 32 interlockingly connecting said drive link 29 with primary link 18.

Driving unit 11 is constructed in such a manner that when retractable roof 3 is in its operating position, extending roof cylinder 14 causes rear roof 8 to pivot together with primary link 18 pivoting around pivotal axis 22, whereas front roof 9 moves back to go down by means of four-joint link mechanism 17 comprising primary link 18 and secondary link 19 and etc., so that retractable roof 3 can be retracted into the trunk room 2. A further document DE 10155887 also discloses a similar construction.

### Problems to be Solved by the Invention

In a motor vehicle equipped with a conventional retractable roof mentioned above, pivot-support points are fixed and their accuracy is to be determined by their machining process.
Retractable roof is usually assembled in its operating position and the positional accuracy of front roof in the operating position is thus secured, whereas the positional accuracy of front roof in the retracted position of retractable roof depends largely on the positional accuracy of the pivot-support points.

Even if each pivot-support point varies from its correct position by, for example, 1 mm only, the leading position of front roof will fluctuate by 10 to 40 mm and interference with the trunk lid might be subsequently caused in the worst case.

In order to secure the positional accuracy in the operating and storage positions of front roof respectively, the distance accuracy between pivot-support points of four-joint link mechanism has to be kept in a range of +/-0.1 mm or +/-0.2 mm. It is, however, quite difficult to keep such an accuracy as +/-0.1 mm or +/-0.2 mm in mass-produced links, because a link of the four-joint link mechanism is approx. 600 mm long and moreover, the link shape is complicated. It is thus required to keep the accuracy by carrying out an additional correcting process or by adding a working tool in the machining process, which finally makes the productivity lower.

In view of the problems mentioned above, it is a primary object of the present invention to provide a motor vehicle in which the position of front roof does not change substantially in its operating position but may be adjustable in its storage position, so that the positional accuracy of the front roof in both operating and storage positions is secured.

### Means for Solving the Problem

A technical means for solving the technical problem comprises a retractable roof that is adapted to be retracted freely from an operating position for covering a vehicle compartment into a retracted position to be housed in a storage room, said retractable roof comprising a rear roof for covering a rear portion of said compartment and a front roof for covering a front portion of said compartment, said retractable roof further comprising a four-joint link mechanism for operatively supporting the front roof such that the front roof can change its position freely between its operating position and retracted position, and said four-joint link mechanism comprising a pair of links, each having one end coupled pivotally to the vehicle body and the other end coupled pivotally to the front roof, wherein the position of at least one of pivot-support points of said four-joint link mechanism is adjustable so that the position of the front roof remains substantially unchanged in its operating position but the position of the front roof may be adjustable in its retracted position.

It may be preferable that the position of a pivot-support point of at least one link of the four-joint link mechanism is adapted to be adjustable in the operating position of the retractable roof along a direction substantially following a circular arc around the other pivot-support point of said link with a radius defined by the distance between said two pivot-support points. It may be also preferable that said four-joint link mechanism comprises a primary link, which is fixedly mounted to said rear roof, each having one end pivotally coupled to a main bracket fixed to the vehicle body and the other end pivotally coupled to the front roof, and a secondary link each having one end pivotally coupled to the main bracket and the other end pivotally coupled to the front roof, wherein the position of said pivot-support point of said secondary link relative to the main bracket is made adjustable.

It may be also preferable that a configuration in which a link fixing member for supporting one pivot-support point of the secondary link is mounted to the main bracket so as to be capable of being fixedly secured thereto, wherein said link fixing member can be moved in the position adjusting direction of said one pivot-support point of the secondary link.

It may be also preferable that the main bracket is provided with a position adjusting screw arranged so as to be screwed in or out freely in the position adjusting direction of said one pivot-support point of the secondary link and also to come into contact with said link fixing member, wherein the position of said one pivot-support point of the secondary link is made adjustable by screwing said position adjusting screw in or out and thereby moving the link fixing member.

### Embodiment of the Invention

Hereinafter, embodiments of the present invention will be described with reference to the drawings.

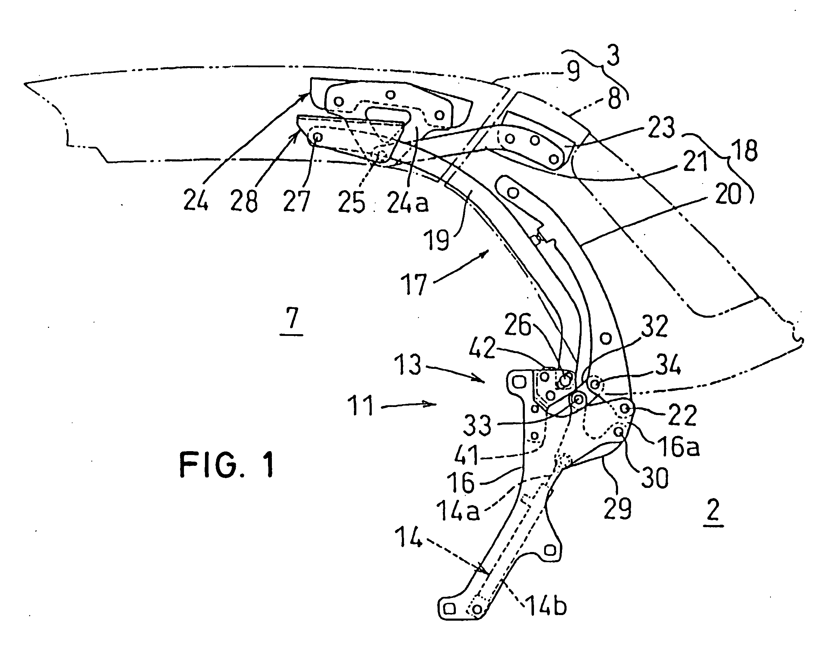

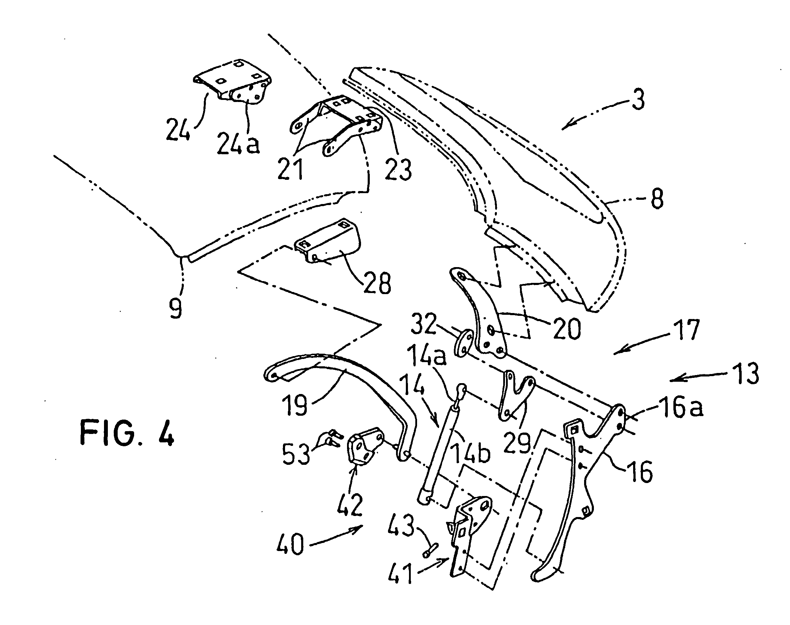

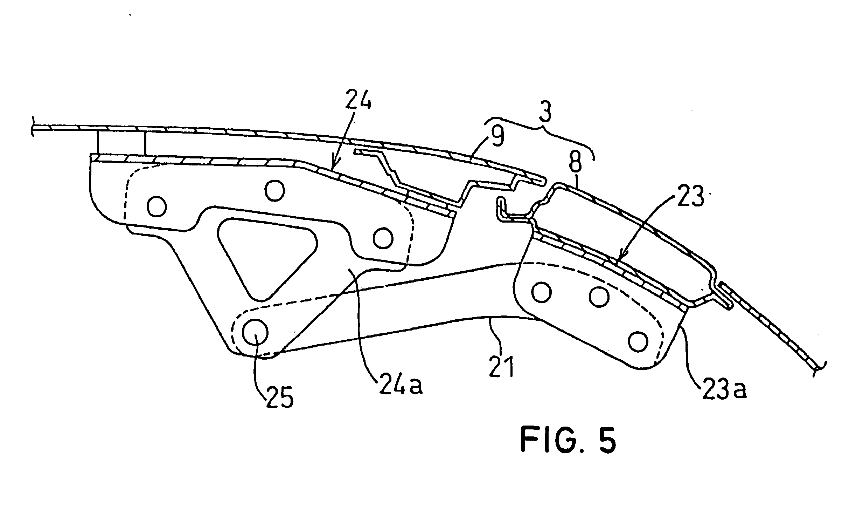

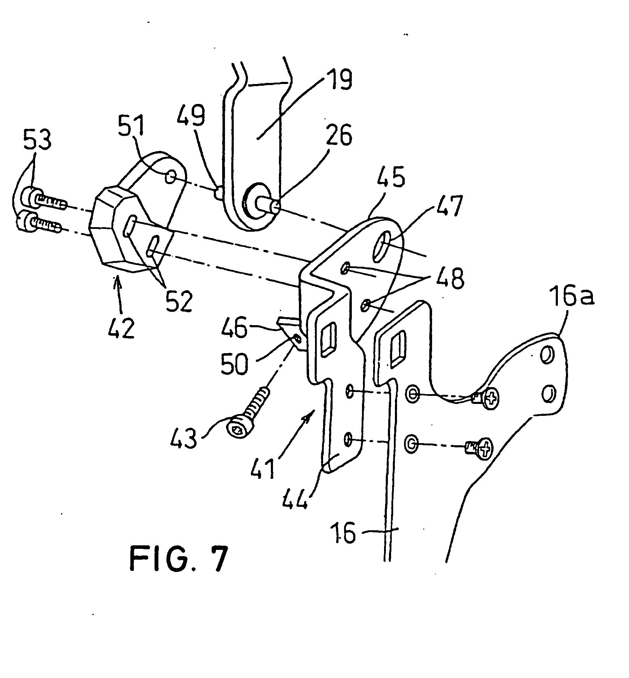

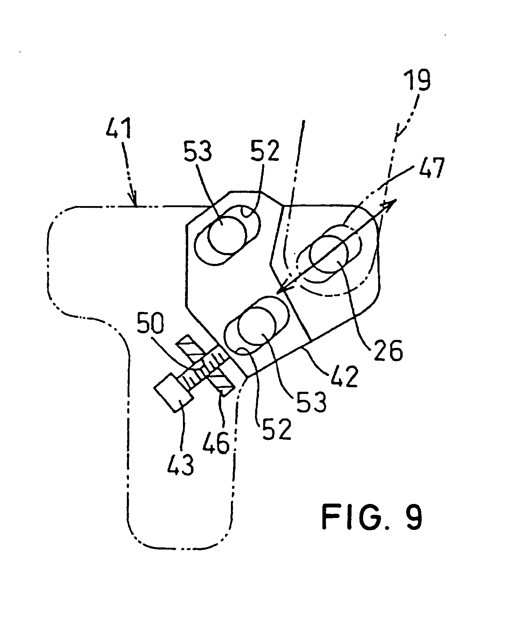

Figs. 1 - 10 illustrate the first embodiment.
In Figs. 1 - 3, 1 represents a motor vehicle (passenger car) with a retractable roof 3 that can be housed in a storage room 2, at the rear thereof a trunk room 2 (luggage room) that can be opened or closed by a lid 4 (trunk lid) is provided, and the trunk room 2 represents the storage room 2 (it is also possible to have a storage space divided into a storage room and a trunk room by a partition wall in the rear portion of vehicle body).

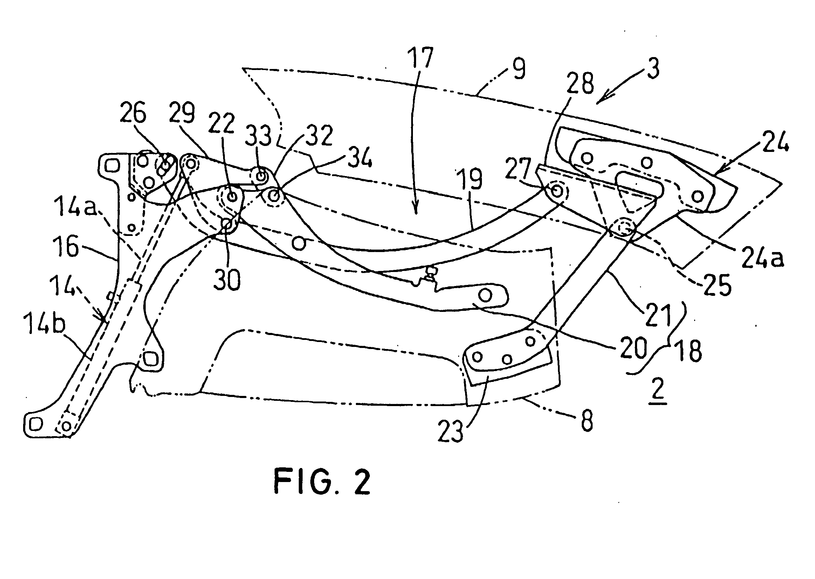

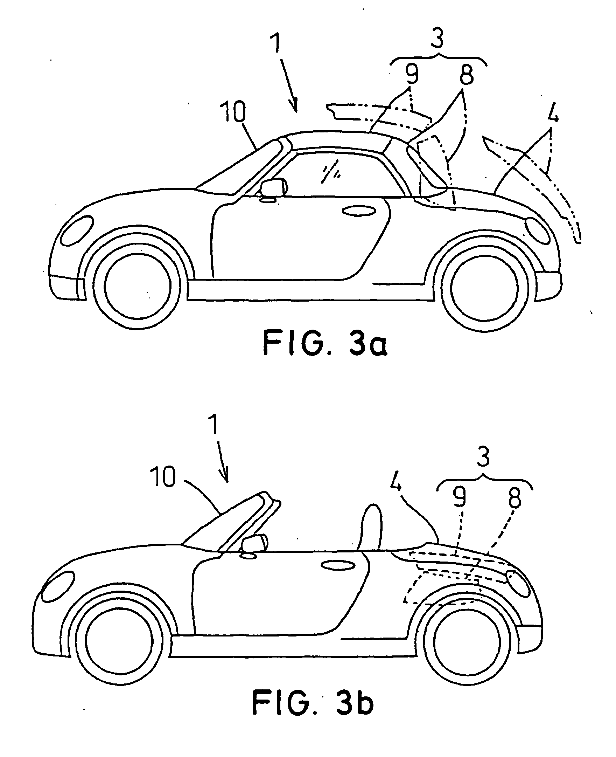

Lid 4 covering a front portion of storage room 2 is supported by a drive unit such as electric drive (not illustrated) so as to be moved upward with front raised inclination (see Fig. 3a), whereby storage room 2 may be freely opened or closed. Moreover, the front portion of storage room 2 is separated from a compartment 7 by an interior material (partition wall) arranged on the back area of seat. Retractable roof 3 comprising a posterior rear roof 8 and an anterior front-roof 9 is freely movable (free to change its positions) by means of a drive unit 11 between its operating position for covering compartment 7 (shown in Figs. 1 and 3a) and its retracted position housed in storage room 2 (shown in Figs. 2 and 3b).

When retractable roof 3 is in its operating position, rear roof 8 extends up- and forward from the foreside of storage room 2 to cover the rear side of compartment 7, whereas front roof 9 extends forward from the front end of rear roof 8 up to the top of front window 10 to cover the front portion of compartment 7.

Moreover, as shown in Fig. 2, when retractable roof 3 is in its retracted position, rear roof 8 is housed such that its inside (toward compartment 7) turns upward, whereas front roof 9 is housed with its inside (toward compartment 7) faced downward so as to be put on rear roof 8.

As shown in Figs. 1, 2, 4 and 5, drive unit 11 for driving retractable roof 3 is equipped with a pair of right-and-left shift-controlling mechanisms 13 and a drive means 14 comprising actuators such as hydraulic cylinder, air cylinder, electric motor and the like to operate said shift-controlling mechanisms 13. Each of the right-and-left shift-controlling mechanisms 13 has a main bracket 16 erectly fixed to the body of motor vehicle 1, which is made of plate material and arranged below the side of rear roof 8 in its operating position and on the side of storage room 2.

Each of right-and-left shift-controlling mechanisms 13 has a four-joint link mechanism 17 to support retractable roof 3 such that it can freely change its positions, namely from its operating position to its retracted position and vice versa, and four-joint link mechanism 17 comprises a pair of primary link 18 and secondary link 19. As shown in Fig. 1, when retractable roof 3 is in its operating position, primary link 18 is divided into a first link 20 located on the lower side and a second link 21 located on the upper side, and these first link 20 and second link 21 are interconnected via rear roof 8 (in other words, rear roof 8 composes a portion of primary link 18).

The first link 20 is arranged on the side of retractable roof 3 and fixedly mounted to the lateral inside of rear roof 8 with bolts and the like, and one end (the bottom) thereof is pivotally connected with a support part 16a at the upper back of main bracket 16 to be freely pivotable around the axe center in the lateral direction via a pivotal axis 22 (pivot-support point), whereby rear roof 8 is supported on main bracket 16 freely pivotable around lateral pivotal axis 22.
The second link 21 is arranged in the lateral center of retractable roof 3, and one end in the longitudinal direction (posterior side) thereof is fixed to the top of rear roof 8, whereas the other end in the longitudinal direction (anterior side) thereof is pivotally connected with the back part of front roof 9 so as to be freely pivotable around the lateral axe, whereby rear roof 8 and front roof 9 are interlockingly connected.

In the embodiment of the present invention, a mounting bracket 23 formed U-shape with a downward opening as viewed from the front side is fixedly mounted to the central inside in the lateral direction of the top of rear roof 8 with bolts and the like, and right-and-left second links 21 are fixedly mounted to right-and-left side walls 23a of this mounting bracket 23 respectively.

Moreover, a connecting bracket 24 formed U-shape with a downward opening as viewed from the front side is fixedly mounted to the center in the lateral direction of the backside of front roof 9, and the foresides of right-and-left second links 21 are pivotally connected via a pivotal axis 25 (pivot-support point) with the lower ends of lateral sidewalls 24a of this connecting bracket 24 so as to be freely pivotable around the lateral axe.

Incidentally second links 21 of right-and-left four-joint link mechanisms 17 may be substituted by a single link.

When retractable roof 3 shown in Fig. 1 is in its operating position, secondary link 19 is disposed on the lateral inside of retractable roof 3 and from the bottom of rear roof 8 through the back portion of front roof 9, and one end thereof (the bottom) is pivotally connected with the top of main bracket 16 via a pivotal axis 26 (pivot-support point) so as to be freely pivotable around the lateral axe, whereas the other end thereof is pivotally connected via a pivotal axis 27 (pivot-support point) with a bracket 28 that is fixed on the side of front roof 9 so as to be freely pivotable around the lateral axe.

On the other hand, the back part of a drive link 29 is pivotally connected with a support 16a of main bracket 16 below a pivotal axis 22 supporting the first link 20 so as to be freely pivotable around the lateral axe via a pivotal axis 30.
One end of a connecting link 32 is pivotally connected with the front top of this drive link 29 so as to be freely pivotable around the lateral axe via a pivotal axis 33, whereas the other end of this connecting link 32 is pivotally connected with the bottom of the first link 20 so as to be freely pivotable around the lateral axe via a pivotal axis 34.

Moreover, a cylinder rod 14a of roof cylinder 14 comprising a hydraulic cylinder exemplified as said drive means 14 is pivotally connected with the front bottom of drive link 29 via ball joints and the like so as to be freely pivotable around the lateral axe, and a cylinder body 14b of said roof cylinder 14 is pivotally connected with the bottom of main bracket 16 via ball joints and the like so as to be freely pivotable around the lateral axe.
In the retractable roof device comprising retractable roof 3 and drive unit 11 of said structure to bring retractable roof 3 from its operating position into storage room 2, it is necessary to first raise lid 4 upward by inclining its foreside upwardly using the drive unit (not illustrated) to open the portion of storage room 2 blocked by lid 4 and then to extend roof cylinder 14 (to project piston rod 14a of roof cylinder 14 out of cylinder body 14b).

Extending of roof cylinder 14 will make drive link 29 pivot, and the pivoting of this drive link 29 causes a connecting link 32 to push the lower portion of the first link 20 above a pivotal axis 22 backward, so that first link 20 pivots back around pivotal axis 22, whereby rear roof 8 is retracted into storage room 2 with its inside faced upward.

Moreover, when rear roof 8 and primary link 18 pivot back around pivotal axis 22, front roof 9 moves backward and in conjunction with this movement secondary link 19 also pivots back around pivotal axis 26, and front roof 9 is supported with its inside faced downward by four-joint link mechanism 17 comprising primary link 18 and secondary link 19 etc. and moves backward in said state to go down, so that it may be retracted into storage room 2 to be put on the outside of rear roof 8.

Once retractable roof 3 is retracted into storage room 2, the foreside of lid 4 lowers and a major part of storage room 2 is closed.

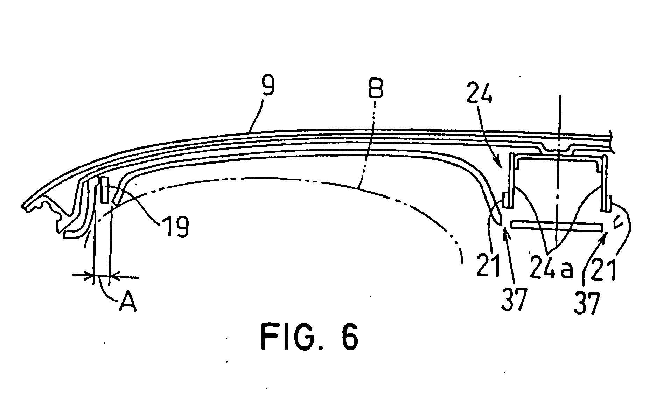

Moreover, as shown in Fig. 6, compartment 7 side of retractable roof 3 is covered with an interior trim 36, and this interior trim 36 is cut out at the side of retractable roof 3 so as not to block any function of secondary link 19 (not to interfere with secondary link 19).

Furthermore, on the lateral center of the interior trim 36, a slit 37 is also formed so as not to prevent any function of second link 21 of primary link 18.

In said structure, primary link 18 is divided into first link 20 and second link 21 and moreover first link 20 and second link 21 are fixedly mounted to rear roof 8 respectively, so that changing of the fitting position of first link 20 or second link 21 enables the dimensional adjustment between pivot-support points (adjustment of distance between axes 22 and 23) of primary link 18.
Moreover, primary link 18 is divided into first link 20 and second link 21 and furthermore second link 21 is arranged at the lateral center of retractable roof 3, so that the oscillating line B of occupant's head can be made wider (the head clearance can be increased) as shown in Fig. 6 to improve the comfort in the vehicle compartment.

Even if primary link 18 is divided, it costs roughly equal to the conventional structure.

Moreover, in this embodiment, primary link 18 is divided into first link 20 and second link 21 and furthermore second link 21 is arranged at the lateral center of retractable roof 3, so that the cutout width A of interior trim 36 can be remarkably reduced as shown in Fig. 6.

Besides, in said structure, second link 21 of primary link 18 may be arranged on the right-and-left sides of retractable roof 3.

Retractable roof 3 is usually assembled in its operating position and the positional accuracy of front roof 9 in its operating position is thus ensured, whereas the positional accuracy of front roof 9 with retractable roof 3 in its retracted position depends largely on the positional accuracy of pivot-support points 22, 24, 26 and 27, and more concretely, the deviation in each pivot-support point 22, 24, 26 or 27 by, for example, 1 mm only makes the leading edge of front roof 9 in its retracted position fluctuate by 10-40 mm, so that interference with trunk lid 4 may occur in the worst case.

Subsequently in this embodiment, an adjusting mechanism 40 is provided to align the position of front roof 9 in its retracted position.

As shown in Figs. 1, 2, 4 and 7 through 10, this adjusting mechanism 40 comprises a support member 41 fixedly mounted to main bracket 16, a link fixing member 42 securing secondary link 19 to this support member 41 and a positioning screw 43.

Supporting member 41 comprises a mounting wall 44 fixedly mounted to the top forepart of main bracket 16 with screws and the like, a supporting wall 45 offset inward in the lateral direction from mounting wall 44 and projected backward and a screw mounting wall 46 that projects inward out of mounting wall 44 in the lateral direction to have positioning screw 43 thereon.

At the bottom of secondary link 19, said pivotal axis 26 is arranged to project outward in the lateral direction, and a support spindle 49 is arranged concentric with pivotal axis 26 to project inward in the lateral direction.
At the back of supporting wall 45, a guide groove 47 into which pivotal axis 26 on the bottom of secondary link 19 is inserted and guided is formed to pass through in the lateral direction, and a pair of upper and lower tapped holes 48 are formed on the forepart of this guide groove 47.

On screw mounting wall 46, a tapped through-hole 50 is formed, therein said positioning screw 43 is screwed.

At the back of link fixing member 42, an insert hole 51 is formed, therein said support spindle 49 on one end (the bottom) of secondary link 19 is inserted so as to be relatively pivotable around the axe center and relatively immovable toward the direction crossing the axe at right angles, so that one end of secondary link 19 and link fixing member 42 are integrally movable.

On this link fixing member 42, a pair of upper and lower screw insert holes 52 are formed, and link fixing member 42 is fixedly mounted to support wall 45 of support member 41 by means of a pair of upper and lower fixing screws 53 which are inserted into these screw insert holes 52 to be screwed in tapped holes 48 formed on support wall 45 of support member 41, whereby one end of secondary link 19 is supported against main bracket 16 so as to be freely pivotable around the axe center of pivotal axis 26 and support spindle 49 and immovable toward the direction crossing to the axe of pivotal axis 26 and the like at right angles.

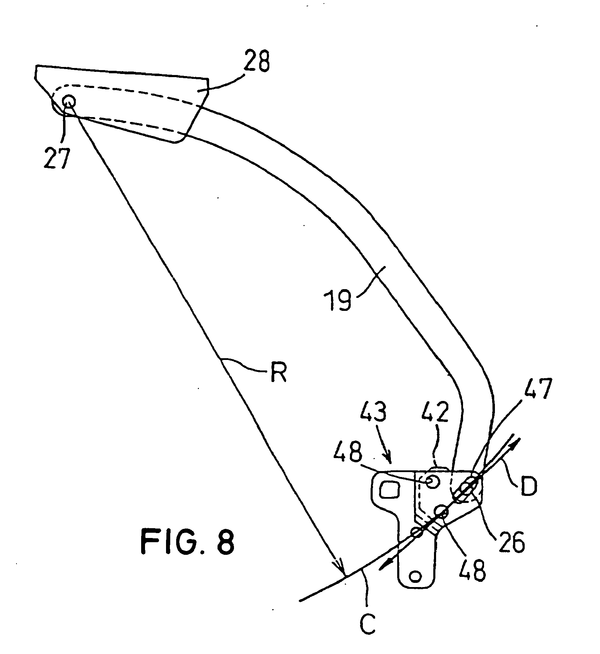

As shown in Fig. 8, a guide groove 47 of said support member 41 is a long slit along the direction D tangential to the circular arc C around the axis center of pivotal axis 27 with radius R defined by the distance between pivotal axis 26 at one end and pivotal axis 27 at the other end of secondary link 19, and one end (pivotal axis 26) of secondary link 19 can be moved (position adjustable) to the tangential direction D.
Moreover, screw insert holes 52 formed on link fixing member 42 are a long slit parallel to said tangential direction D, and link fixing member 42 can be moved (position adjustable) to the same direction with the shift direction D (position adjusting direction) of one end of secondary link 19.

Positioning screw 43 is arranged so as to be freely screwed in or out in the position adjusting direction D of one end of secondary link 19 and to come into contact with link fixing member 42, so that said one end of secondary link 19 together with link fixing member 42 is made adjustable to move to the direction D shown with the arrow by screwing positioning screw 43 in or out (move to or away from the position adjusting direction).

Accordingly, shifting of one end of secondary link 19 to the position adjusting direction D shown with the arrow will be restricted by tightening fixing screw 53 to fix link fixing member 42 to support member 41, whereas shifting of one end of secondary link 19 to the position adjusting direction D shown with the arrow will be allowed by loosening fixing screw 53.

In motor vehicle 1 of said structure, retractable roof 3 can be accurately fixed to the correct position in its operating position.

And, if the position of pivotal axis 27 at other end of secondary link 19 deviates by approx. +-0.3 mm in the longitudinal or vertical direction and front roof 9 does not reach the correct position (front roof 9 is in irregular pose) when retractable roof 3 is shifted to the storage position, the vertical position of the foreside of front roof 9 may be corrected (pose of front roof 9 should be corrected) by loosening fixing screw 53 to screw positioning screw 43 in or out.

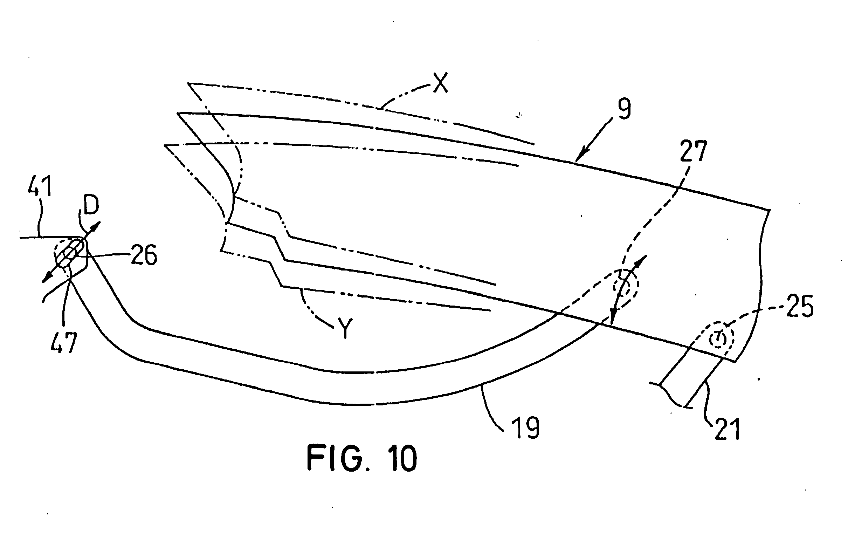

More concretely, fixing screw 53 is loosened to bring one end of secondary link 19 movable and positioning screw 43 is then screwed in to push up said end of secondary link 19, so that the other end of secondary link 19 moves upward around pivotal axis 25 and the foreside of front roof 9 oscillates upward around pivotal axis 25 and its position is adjusted, as shown by the imaginary line X in Fig. 10.

On the contrary, position adjusting screw 43 is screwed out to lower one end of secondary link 19 due to its own weight, so that the other end of secondary link 19 moves downward around pivotal axis 25 and the foreside of front roof 9 oscillates downward around pivotal axis 25 and its position is adjusted, as shown by the imaginary line Y in Fig. 10.

After front roof 9 has been correctly positioned, the position of one end of secondary link 19 is fixed by tightening fixing screw 53 to fix link fixing member 42 to main bracket 16.

On the other hand, when retractable roof 3 is in its operating position, pivotal axis 26 at one end of secondary link 19 is adapted to be freely movable to the direction D tangential to circular arc C around the axe center of pivotal axis 27 with radius R defined by the axe-center distance between pivotal axis 26 at one end and pivotal axis 27 at the other end of secondary link 19 (position is freely adjustable to the direction along circular arc C around the axe center of pivotal axis 27) and pivotal axis 27 does not substantially move when one end of secondary link 19 is moved to the direction D shown with the arrow, so that the operating position of front roof 9 will not substantially change (no positional change) when front roof 9 is brought into its operating position after its position has been corrected in its storage position.

The overall vertical position of front roof 9 in its storage position is determined by the pivoting amount of primary link 18 from the operating position and can be adjusted by, for example, adjusting the stop position of second link 21 in the storage position.

Moreover, based on the same concept, it will be also allowed to make the position of front roof 9 (vertical position at the foreside) adjustable in its storage position, keeping its position in the operating position substantially unchanged, by making the position of other pivotal axes 27, 22 and 25 adjustable to move and adjust their position.

When the position of pivotal axis 27 is to be made adjustable, it has to be supported fixed or movable toward the direction tangential to a circular arc (or direction corresponding said arc) around pivotal axis 26 with the radius defined by the center-to-center distance of pivotal axes 26 and 27 in the operating position of retractable roof 3.

When the position of pivotal axis 22 or 25 is made adjustable, it is supported fixed or movable toward the direction tangential to an arc (or direction corresponding said arc) around pivotal axis 22 or 25 with the radius defined by the center-to-center distance of pivotal axes 22 and 25 in the operating position of retractable roof 3.

It is required that the position of at least one of the pivot-support points 27, 26, 25 and 22 is freely adjustable, but it may be allowed that more than one pivot-support point are freely adjustable.

It is also allowed that secondary link 19 is driven around pivotal axis 26 by actuators to cause retractable roof 3 to be retracted into the storage room (action to change the position).

In said structure, it is also allowed that support member 41 is in a body with main bracket 16 and that guide groove 47 and screw insert hole 52 are formed circular around pivotal axis 27 at the other end of secondary link 19.

Although primary link 18 is divided in said embodiment, it may be made of single link as a conventional one.

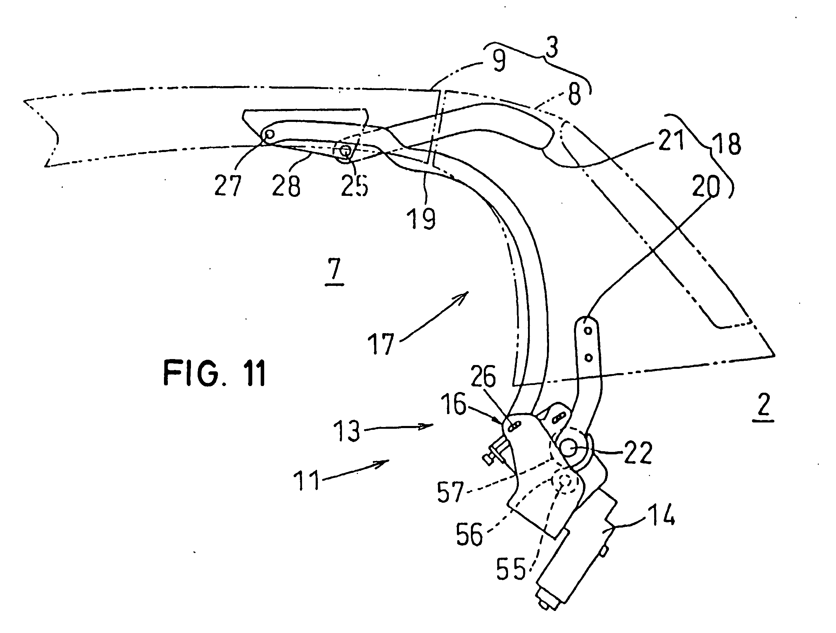

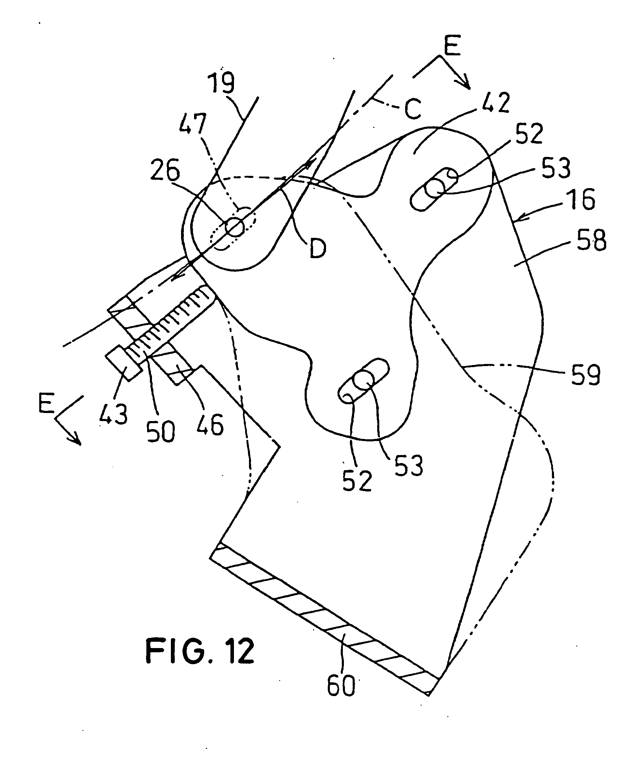

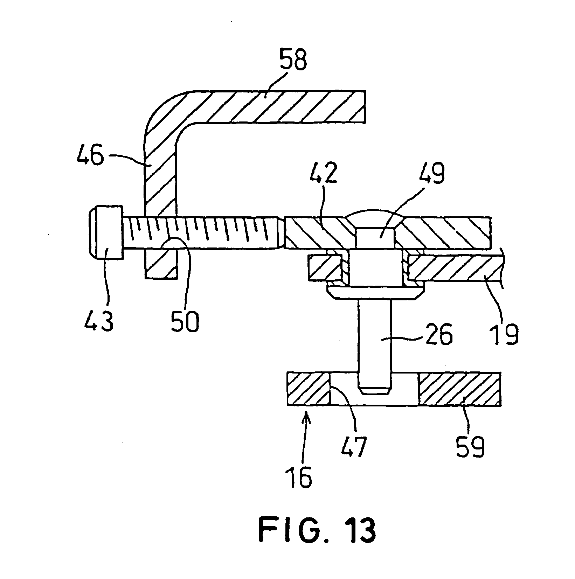

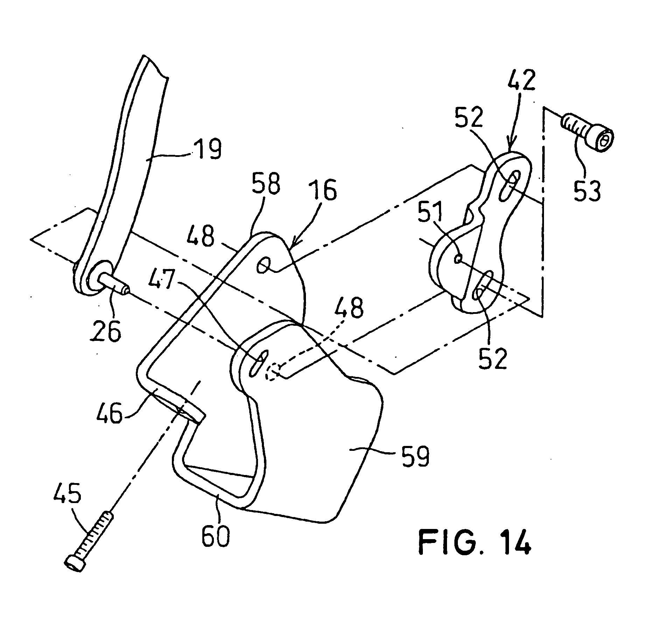

Figs. 11 through 14 indicate the second embodiment of the invention.
In drive unit 11 according to the second embodiment, an electric motor 14 is employed as a drive means 14 and the motor 14 is fixedly mounted to main bracket 16, and a drive gear 56 rotating integrally with the output shaft 55 of motor 14 engages with a transmission gear 57 integrally rotating around the axe center of pivotal axis 22 together with first link 20 of primary link 18, so that first link 20 is pivotally driven around pivotal axis 22 by motor 14.

Main bracket 16 in this embodiment comprises a pair of support walls 58 and 59 opposing each other in the lateral direction and a connecting wall 60 connecting the both bottom portions of said support walls. A guide groove 47 is formed in the outer support wall 59 and a pivotal axis 26 of secondary link 19 is inserted into guide groove 47 to be guided, while a screw hole 48 is formed in the inner support wall 58 to fix a link fixing member 42.

A screw mounting wall 46 to fix a positioning screw 43 is formed integrally with main bracket 16.

Other units are composed substantially same as said first embodiment of the invention and further explanation will be thus omitted by giving same numerals to members having same function.

### Effect of the Invention

According to the present invention, the retractable roof is equipped with a four-joint link mechanism that operatively supports a front roof such that it can freely change its operating and retracted positions and comprises a pair of links, each having one end coupled pivotally to the vehicle body and the other end coupled pivotally to said front roof , wherein the position of at least one of pivot-support points of the four-joint link mechanism is made adjustable, so that the position of the front roof remains substantially unchanged in its operating position but the position of the front roof may be adjustable in its retracted position. Subsequently, the position of the front roof does not change substantially in its operating position even when the position of the front roof has been adjusted in its storage position, and it may be realized that the positional accuracy in both the operating and storage positions of the front roof can be easily secured by precisely mounting the retractable roof to the correct position in its operating position and by adjusting the position of front roof when the retractable roof is housed and the front roof is not positioned in the correct position, and that the deviations caused in the machining process can be revised in the final process and the productivity can be finally increased.

### Brief Description of the Drawings

Fig. 1 A side elevational view showing a state where a retractable roof is in its operating position.
Fig. 2 A side elevational view showing a state where a retractable roof is in its retracted position.
Fig. 3 A side elevational view of a motor vehicle
Fig. 4 An exploded perspective view showing components of a retractable roof and its drive uni
Fig. 5 A longitudinal sectional view of a coupling of a second link
Fig. 6 An elevational sectional view of a front roof
Fig. 7 An exploded perspective view showing components of an adjusting mechanism according to a first embodiment
Fig. 8 A side elevational view of a second link and the adjusting mechanism when a retractable roof is in its operating position.
Fig. 9 A side sectional view of an adjusting mechanism according to the first embodiment
Fig. 10 A side elevational view showing a second link and the like when a retractable roof is in its retracted position.
Fig. 11 A side elevational view showing main components of a motor vehicle according to the second embodiment
Fig. 12 A side sectional view showing an adjusting mechanism according to the second embodiment
Fig. 13 A sectional view taken along the E-E line of Fig. 12
Fig. 14 A perspective view showing the adjusting mechanism according to the second embodiment
Fig. 15 A side elevational view showing a four-joint link mechanism of a retractable roof according to the prior art

### Description of Reference Numerals and Symbols

- 2: Storage room
- 3: Retractable roof
- 7: Vehicle compartment
- 8: Rear roof
- 9: Front roof
- 17: Four-joint link mechanism
- 18: Primary link
- 19: Secondary link
- 26: Pivotal axis (pivot-support point)
- 27: Pivotal axis (pivot-support point)
- 42: Link fixing member
- 43: Positioning screw
- R: Radius
- C: Circular arc
- D: Position adjusting direction

## Claims

1. A motor vehicle comprising a retractable roof (3) that is adapted to be retracted freely from an operating position for covering a vehicle compartment (7) into a retracted position to be housed in a storage room (2), said retractable roof comprising a rear roof (8) for covering a rear portion of said compartment (7) and a front roof (9) for covering a front portion of said compartment (7), said motor vehicle further comprising a four-joint link mechanism (17) for operatively supporting said front roof (9) such that the front roof can change its position between said operating position and said retracted position, and said four-joint link mechanism comprising a pair of links (18, 19), each having one end coupled pivotally to the vehicle body and the other end couple pivotally to said front roof (9) at pivot support points (26,27) **characterised in that** the position of at least one (26) of said pivot-support points of said four-joint link mechanism (17) is adjustable so that the position of said front roof (9) remains substantially unchanged in said operating position but the position of said front roof (9) may be adjustable in said retracted position.

2. A motor vehicle in accordance with claim 1, in which said one pivot-support point (26) of said at least one link (19) of said four-joint link mechanism is adapted to be adjustable in said operating position of said retractable roof (3) along the direction (D) substantially following a circular arc (C) around the other pivot-support point (27) of said link (19) with radius (R) defined by the distance between said two pivot-support points (26, 27).

3. A motor vehicle in accordance with claim 1 or 2, in which said four-joint link mechanism (17) comprises:
a primary link (18) which is fixedly mounted to said rear roof (8), each having one end pivotally coupled to a main bracket (16) fixed to the vehicle body and the other end pivotally coupled to said front roof (9); and
a secondary link (19) each having one end pivotally coupled to said main bracket (16) and the other end pivotally coupled to said front roof (9), wherein the position of said pivot-support point (26) of said secondary link (19) relative to said main bracket (16) is made adjustable.

4. A motor vehicle in accordance with claim 3, **characterized in** such a configuration in which a link fixing member (42) for supporting said one pivot-support point (26) of said secondary link (19) is mounted to said main bracket (16) so as to be capable of being fixedly secured thereto, wherein said link fixing member (42) can be moved in the position adjusting direction (D) of said one pivot-support point (26) of said secondary link (19).

5. A motor vehicle in accordance with claim 4, in which said main bracket (16) is provided with a position adjusting screw (43) arranged so as to be screwed in or out freely in the position adjusting direction (D) of said one pivot-support point (26) of said secondary link (19) and also to come into contact with said link fixing member (42), wherein the position of said one pivot-support point (26) of said secondary link (19) is made adjustable freely by screwing said position adjusting screw (43) in or out and thereby moving said link fixing member (42).

## Patentansprüche

1. Kraftfahrzeug mit einem versenkbaren Dach (3), das geeignet ist, frei aus einer Betriebsstellung, in der es einen Fahrzeuginnenraum (7) abdeckt, in eine versenkte Stellung, in der es in einem Ablageraum (2) aufgenommen ist, versenkt zu werden, wobei das versenkbare Dach ein hinteres Dach (8) zum Abdecken eines hinteren Abschnitts des Fahrzeuginnenraumes (7) und ein vorderes Dach (9) zum Abdecken eines vorderen Abschnitts des Fahrzeuginnenraumes (7) aufweist, wobei das Kraftfahrzeug des weiteren einen Viergelenkmechanismus (17) zum derartigen betriebsfähigen Tragen des vorderen Daches (9) aufweist, dass das vordere Dach seine Stellung zwischen der Betriebsstellung und der versenkten Stellung ändern kann,
und wobei der Viergelenkmechanismus ein Paar Lenker (18, 19) aufweist, von denen jeder das eine Ende mit der Fahrzeugkarosserie und das andere Ende mit dem vorderen Dach (9) an Schwenklagerpunkten (26, 27) schwenkbar gekoppelt hat,
**dadurch gekennzeichnet,**
**dass** die Stellung von zumindest einem (26) der Schwenklagerpunkte des Viergelenkmechanismus (17) verstellbar ist, so dass die Stellung des vorderen Daches (9) in der Betriebsstellung im wesentlichen unverändert bleibt, jedoch die Stellung des vorderen Daches (9) in der versenkten Stellung verstellbar sein kann.

2. Kraftfahrzeug nach Anspruch 1, bei dem der eine Schwenklagerpunkt (26) des zumindest einen Lenkers (19) des Viergelenkmechanismus geeignet ist, um in der Betriebsstellung des versenkbaren Daches (3) entlang der Richtung (D) verstellbar zu sein, die im wesentlichen einem Kreisbogen (C) um den anderen Schwenklagerpunkt (27) des Lenkers (19) mit dem Radius (R) folgt, der von dem Abstand zwischen den Schwenklagerpunkten (26, 27) bestimmt ist.

3. Kraftfahrzeug nach Anspruch 1 oder 2, bei dem der Viergelenkmechanismus (17) aufweist:
einen ersten Lenker (18), der an dem hinteren Dach (8) fest angebracht ist, dessen eines Ende mit einem an der Fahrzeugkarosserie befestigten Hauptlager (16) schwenkbar gekoppelt ist und dessen anderes Ende mit dem vorderen Dach (9) schwenkbar gekoppelt ist; und
einen zweiten Lenker (19), dessen eines Ende mit dem Hauptlager (16) schwenkbar gekoppelt ist und dessen anderes Ende mit dem vorderen Dach (9) schwenkbar gekoppelt ist, wobei die Stellung des Schwenklagerpunktes (26) des zweiten Lenkers (19) relativ zu dem Hauptlager (16) verstellbar gebildet ist.

4. Kraftfahrzeug nach Anspruch 3, **gekennzeichnet durch** eine solche Konfiguration, bei der ein Lenkerfixierungsteil (42), das den einen Schwenklagerpunkt (26) des zweiten Lenkers (19) trägt, an dem Hauptlager (16) derart angebracht ist, dass es daran unbeweglich gesichert werden kann, wobei das Lenkerfixierungsteil (42) in die Richtung (D) zum Verstellen der Stellung des Schwenklagerpunktes (26) des zweiten Lenkers (19) bewegt werden kann.

5. Kraftfahrzeug nach Anspruch 4, bei dem das Hauptlager (16) mit einer Positionseinstellschraube (43) versehen ist, die derart angeordnet ist, dass sie in der Richtung (D) zum Verstellen der Stellung des Schwenklagerpunktes (26) des zweiten Lenkers (19) frei ein- oder ausgeschraubt werden kann und dass sie auch mit dem Lenkerfixierungsteil (42) in Kontakt kommen kann, wobei die Stellung des Schwenklagerpunktes (26) des zweiten Lenkers (19) frei einstellbar gebildet ist, indem die Positionseinstellschraube (43) ein- oder ausgeschraubt wird und **dadurch** das Lenkerfixierungsteil (42) bewegt wird.

## Revendications

1. Véhicule motorisé comprenant un toit rétractable (3) qui est adapté de manière à être rétracté librement d'une position de fonctionnement pour recouvrir un compartiment de véhicule (7) à une position rétractée pour être logé dans un espace de stockage (2), ledit toit rétractable comprenant un toit arrière (8) pour recouvrir une partie arrière dudit compartiment (7) et un toit avant (9) pour recouvrir une partie avant dudit compartiment (7), ledit véhicule motorisé comprenant en outre un mécanisme de liaison à quatre articulations (17) pour supporter de manière opérationnelle ledit toit avant (9) de sorte que le toit avant puisse changer de position entre ladite position de fonctionnement et ladite position rétractée, et ledit mécanisme de liaison à quatre articulations comprenant une paire de liens (18, 19), ayant chacun une extrémité couplée de manière pivotante à la carrosserie du véhicule et l'autre extrémité couplée de manière pivotante audit toit avant (9) au niveau de points de support de pivot (26, 27), **caractérisé en ce que** la position d'au moins l'un (26) desdits points de support de pivot dudit mécanisme de liaison à quatre articulations (17) est ajustable de sorte que la position dudit toit avant (9) reste sensiblement inchangée dans ladite position de fonctionnement mais que la position dudit toit avant (9) puisse être ajustable dans ladite position rétractée.

2. Véhicule motorisé selon la revendication 1, dans lequel ledit point de support de pivot (26) dudit au moins un lien (19) dudit mécanisme de liaison à quatre articulations est adapté de manière à être ajustable dans ladite position de fonctionnement dudit toit rétractable (3) le long de la direction (D) suivant sensiblement un arc de cercle (C) autour de l'autre point de support de pivot (27) dudit lien (19) avec un rayon (R) défini par la distance entre lesdits deux points de support de pivot (26, 27).

3. Véhicule motorisé selon la revendication 1 ou 2, dans lequel ledit mécanisme de liaison à quatre articulations (17) comprend :
un lien primaire (18) qui est monté de manière fixe sur ledit toit arrière (8), ayant chacun une extrémité couplée de manière pivotante à un support principal (16) fixé sur la carrosserie du véhicule et l'autre extrémité couplée de manière pivotante audit toit avant (9) ; et
un lien secondaire (19) ayant chacun une extrémité couplée de manière pivotante audit support principal (16) et l'autre extrémité couplée de manière pivotante audit toit avant (9), dans lequel la position dudit point de support de pivot (26) dudit lien secondaire (19) par rapport audit support principal (16) est rendue ajustable.

4. Véhicule motorisé selon la revendication 3, **caractérisé par** une telle configuration dans laquelle un élément de fixation de liaison (42) pour supporter ledit point de support de pivot (26) dudit lien secondaire (19) est monté sur ledit support principal (16) de manière à pouvoir être fixé de manière sûre sur celui-ci, dans laquelle ledit élément de fixation de liaison (42) peut être déplacé dans la direction d'ajustement de position (D) dudit point de support de pivot (26) dudit lien secondaire (19).

5. Véhicule motorisé selon la revendication 4, dans lequel ledit support principal (16) est doté d'une vis d'ajustement de position (43) disposée de manière à être vissée en dedans ou en dehors librement dans la direction d'ajustement de position (D) dudit point de support de pivot (26) dudit lien secondaire (19) et également de manière à venir en contact avec ledit élément de fixation de liaison (42), dans lequel la position dudit point de support de pivot (26) dudit lien secondaire (19) est rendue ajustable librement en vissant ladite vis d'ajustement de position (43) en dedans ou en dehors, déplaçant ainsi ledit élément de fixation de liaison (42).
